# FASCICULE DE BREVET EUROPEEN

(11) **EP 2 064 050 B1**
(45) Date de publication et mention de la délivrance du brevet: **12.05.2010**
(21) Numéro de dépôt: 07803462.6
(22) Date de dépôt: 13.09.2007
(51) Int. Cl.: B29C 70/44, B29C 70/54, B29C 33/68, B29K 307/04, B29C 37/00

(54) **PROCÉDÉ DE FABRICATION D'UN PANNEAU EN MATÉRIAU COMPOSITE THERMOPLASTIQUE**
VERFAHREN ZUR HERSTELLUNG EINER AUS EINEM THERMOPLASTISCHEN KOMPOSIT HERGESTELLTEN PLATTE
PROCESS FOR MANUFACTURING A PANEL MADE OF A THERMOPLASTIC COMPOSITE

(30) Priorité: 15.09.2006 FR 0653770
(43) Date de publication de la demande: 03.06.2009
(73) Titulaire: AIRBUS OPERATIONS, 31060 Toulouse (FR)
(72) Inventeur: KURTZ, Didier, 44210 Pornic (FR); PAUCHET, Stéphane, 44350 Guerande (FR); BOUVET, David, 44780 Missillac (FR); CHALLET, Marc, 44600 Saint Nazaire (FR)
(74) Mandataire: Ilgart, Jean-Christophe
(86) Numéro de dépôt international: PCT/EP2007/059646
(87) Numéro de publication internationale: WO 2008/031866

(56) Documents cités:
- EP-A- 0 893 235
- US-A- 4 783 362
- US-A- 4 851 280
- US-A- 5 116 216

## Description

### DOMAINE TECHNIQUE

La présente invention se rapporte de façon générale à un procédé de fabrication d'un panneau en matériau composite, en particulier en matériau composite thermoplastique. A titre indicatif, il peut en effet s'agir de composites à matrice thermoplastique résine PEEK ou résine PPS et fibres de carbone continues, mais aussi éventuellement de composites à matrice thermodurcissable résine époxy et fibres de carbone.

L'invention se rapporte préférentiellement, à un procédé de fabrication de panneaux d'une épaisseur comprise entre environ 1 et 20 mm, tels que ceux habituellement rencontrés dans le domaine aéronautique, qui constitue une application particulière pour la présente invention. Effectivement, le procédé objet de l'invention peut être mis en oeuvre afin d'obtenir un panneau de fuselage d'aéronef, qui présente habituellement un taux de fibres proche de 65%. A ce titre, la mise en oeuvre de l'invention peut indifféremment conduire à l'obtention d'un panneau sensiblement plan, ou bien à l'obtention d'un panneau dit à simple ou à double courbures classiquement rencontré dans la constitution des fuselages d'aéronefs. Il est noté que dans les deux cas susvisés, le panneau réalisé par la mise en oeuvre du procédé selon la présente invention peut bien entendu être amené à subir des opérations ultérieures afin de constituer un panneau de fuselage prêt au montage, opérations parmi lesquelles on compte par exemple celle visant à rapporter des raidisseurs par soudage continu sur le panneau obtenu, ces raidisseurs pouvant eux-mêmes être réalisés par estampage de plaques planes également susceptibles d'être obtenues selon le procédé objet de l'invention.

### ETAT DE LA TECHNIQUE ANTERIEURE

Les procédés classiques de fabrication d'un panneau en matériau composite consistent globalement à mettre en oeuvre deux étapes successives, à savoir une étape de drapage suivie d'une étape de consolidation, également dénommée étape de compactage.

L'étape de drapage consiste à réaliser un empilement de nappes de fibres pré-imprégnées de résine, se présentant par exemple chacune sous forme de bande, dans le but d'obtenir une pluralité de couches ou plis superposés dans une direction d'empilement. L'étape de consolidation de l'empilement consiste quant à elle à obtenir le panneau à l'aide d'une plaque de compactage agencée au-dessus de l'empilement. Cette plaque de compactage permet en effet, par l'intermédiaire de l'application d'une pression/dépression, de compacter dans la direction d'empilement l'ensemble constitué par les nappes de fibres pré-imprégnées, et simultanément d'évacuer l'air et les gaz présents dans l'empilement, de sorte que le panneau obtenu présente un taux de porosité acceptable, par exemple inférieur à environ 5%. D'autre part, cette étape de consolidation de l'empilement s'effectue en appliquant un chauffage à ce dernier, par exemple en le plaçant dans une étuve, afin de le porter à la température requise pour obtenir la fusion de la résine pré-imprégnée sur les fibres, et donc dans le but d'obtenir un élément final compact et d'un seul tenant.

Dans les réalisation connues de l'art antérieur, la plaque de compactage vient habituellement au contact de l'empilement de nappes de fibres durant l'étape de consolidation, ce qui peut nuire à la qualité finale du panneau obtenu. En effet, il est tout d'abord indiqué qu'avec cette façon de procéder, l'état de surface de la plaque de compactage risque fortement d'être imprimé sur la surface supérieure du panneau obtenu en fin d'étape de consolidation, ce qui peut parfois conduire à une incompatibilité avec les fortes exigences de qualité de surface rencontrées dans certains domaines, tels que celui de l'aéronautique pour les panneaux de fuselage d'aéronef.

De plus, la présence de cette plaque de compactage au contact de l'empilement, également appelée plaque ou tôle de matage, empêche un dégazage satisfaisant de cet empilement durant l'étape de consolidation. Cette contrainte peut naturellement entraîner l'apparition de porosités au sein de l'élément obtenu, synonymes d'affaiblissement de la résistance mécanique globale de cet élément.

Le document US 5,116,216 décrit un procédé de fabrication d'un panneau en matériau composite à l'aide d'un outillage présentant un support sur lequel on effectue une étape de drapage consistant à réaliser un empilement de nappes de fibres pré-imprégnées, suivie d'une étape de consolidation de l'empilement visant à obtenir ledit panneau à l'aide d'une plaque de compactage agencée au-dessus de cet empilement, un film polyimide continu étant situé au contact de l'empilement de nappes, entre ce dernier et ladite plaque de compactage.

### EXPOSÉ DE L'INVENTION

L'invention a donc pour but de proposer un procédé de fabrication d'un panneau en matériau composite remédiant aux inconvénients mentionnés ci-dessus, relatifs aux réalisations de l'art antérieur.

Pour ce faire, l'invention a pour objet un procédé de fabrication d'un panneau en matériau composite à l'aide d'un outillage présentant un support sur lequel on effectue une étape de drapage consistant à réaliser un empilement de nappes de fibres pré-imprégnées, suivie d'une étape de consolidation de l'empilement visant à obtenir le panneau à l'aide d'une plaque de compactage agencée au-dessus de cet empilement. Selon l'invention, le procédé est mis en oeuvre de sorte qu'un premier ensemble de films polyimides se recouvrant partiellement les uns les autres soit situé au contact de l'empilement de nappes, entre ce dernier et la plaque de compactage.

Ainsi, l'aspect glacé des films polyimides situés au contact de la surface supérieure de l'empilement durant l'étape de consolidation, permet avantageusement d'obtenir un état de surface extrêmement satisfaisant pour le panneau obtenu, et tout à fait compatible avec les fortes exigences de qualité de surface rencontrées dans certains domaines, tels que celui de l'aéronautique pour les panneaux de fuselage d'aéronef.

Par ailleurs, mis à part le fait que ce premier ensemble de films polyimides permette de façon avantageuse d'empêcher l'impression de l'état de surface de la plaque de compactage sur la surface supérieure de l'empilement, cet ensemble autorise également avantageusement un excellent drainage des gaz durant l'étape de consolidation. Cela s'explique par la possible évacuation de l'air et des gaz se trouvant initialement au sein de l'empilement, à travers les zones de chevauchement des films polyimides formant donc avantageusement un ensemble n'assurant pas une totale étanchéité aux gaz vers le haut, dans la direction d'empilement des nappes de fibres.

Le dégazage opéré s'avère ainsi satisfaisant, et permet d'aboutir à un panneau présentant un taux de porosité réduit par rapport à celui rencontré antérieurement, lui assurant des propriétés de résistance mécanique globale particulièrement performantes.

Les films polyimides utilisés pour la mise en oeuvre de l'invention peuvent être réalisés de toutes manières connues de l'homme du métier, par réaction entre un dianydride tétracarboxylique aromatique et une diamine aromatique. L'épaisseur de ces films peut par exemple être de l'ordre de 30 µm, et de façon plus générale être comprise entre environ 20 et 50 µm.

A titre indicatif, les films suivants, disponibles dans le commerce, peuvent être utilisés :
- FILM Thermalimide 50 microns de la société AIRTECH^{®};
- FILM Thermalimide 50 microns de la société RICHMOND^{®} (Réf : UHT750) ; ou
- FILM Thermalimide 50 microns de la société KANEKA^{®} (Réf : 200AV).

De manière générale, du fait de la faible épaisseur de ces films, les zones de chevauchement/recouvrement de ces derniers ne laissent apparaître par impression que des marques superficielles sur la surface de l'empilement après la consolidation de celui-ci, ces marques ne dégradant aucunement l'état de surface, et n'affaiblissant pas significativement les caractéristiques mécaniques globales du panneau obtenu.

Les films polyimides employés, également appelés « thermalimides », sont naturellement choisis pour résister aux températures élevées mises en oeuvre durant l'étape de consolidation de l'empilement, pouvant atteindre 400°C ou plus. Ceux-ci ne devant pas être intégrés au panneau final, ils sont donc prévus pour pouvoir être facilement retirés de la surface supérieure de l'empilement compacté ou de la plaque de compactage, par exemple par pelage. Dans le cas le plus souvent rencontré où les films utilisés n'adhèrent ni à la surface supérieure de l'empilement compacté ni à la plaque de compactage en fin d'étape de consolidation, le retrait de ces films polyimides ne pose bien évidemment aucun souci particulier.

De préférence, le procédé est mis en oeuvre de sorte qu'un second ensemble de films polyimides se recouvrant partiellement les uns les autres soit situé au contact de l'empilement de nappes, entre ce dernier et le support de l'outillage.

Ainsi, les caractéristiques avantageuses décrites ci-dessus et obtenues au niveau de la surface supérieure du panneau constitué par l'empilement compacté peuvent alors également être procurées à la surface inférieure de ce panneau du fait de la présence de ce second ensemble de films polyimides. En effet, avec une telle mise en oeuvre, l'état de surface du support de l'outillage n'est avantageusement plus imprimé sur la surface inférieure du panneau, puisque durant l'étape de consolidation, la partie inférieure de l'empilement se trouve au contact des films polyimides revêtant un aspect glacé.

A titre indicatif, il est préférable de décaler les zones de chevauchement du premier et du second ensemble de films polyimides considérées selon la direction d'empilement des nappes de fibres, à savoir de ne pas disposer ces zones de chevauchement en vis-à-vis deux à deux selon cette direction, même si cela reste bien entendu envisageable, sans sortir du cadre de l'invention.

De préférence, le procédé comporte également une étape de mise en place sur la plaque de compactage d'un premier tissu de drainage, cette étape étant mise en oeuvre de manière à ce que le premier tissu soit situé au contact de cette plaque de compactage et séparé du premier ensemble de films polyimides par cette même plaque, impliquant donc que les deux faces opposées de la plaque de compactage soient respectivement en contact avec le premier ensemble de films, et avec le premier tissu de drainage. Il comporte en outre une étape de mise en place sur le support de l'outillage d'un second tissu de drainage, cette étape étant mise en oeuvre de manière à ce que le second tissu de drainage soit situé au contact du support de l'outillage, entre ce dernier et le second ensemble de films polyimides.

Les tissus précités permettent alors d'effectuer un drainage des gaz satisfaisant durant l'étape de consolidation de l'empilement, en association avec les ensembles de films polyimides se chevauchant partiellement.

Toujours de manière préférentielle, le procédé comporte en outre une étape de mise en place d'au moins une cale de limitation des effets de bord susceptibles de se produire lors de l'étape ultérieure de consolidation de l'empilement, chaque cale étant disposée le long d'un bord de cet empilement. Préférentiellement, c'est la totalité du périmètre de l'empilement qui est équipée de telles cales, qui permettent donc un gain en matière. L'influence positive sur les effets de bord précités découle du fait que ces cales permettent de limiter le flux de matière transversal. En effet, lors de l'opération de compactage, la plaque de compactage vient « presser » l'empilement de plis. Sous l'effet de cette pression, la résine qui est très fluide à cette température, tend à s'écouler vers le bord de la plaque. Elle vient « buter » contre les cales précitées, également dites cales de matage. Lorsque la plaque de compactage atteint les cales de matage, elle exerce sur celles-ci un effort normal au contact. Chaque cale est ainsi soumise, dans le plan des plis, à la poussée de la résine, à l'effort normal de la plaque de compactage et à sa réaction sur la plaque de marbre, et donc finalement au frottement entre d'une part la plaque de compactage, et d'autre part la plaque de marbre. Ce frottement empêche alors les cales de bouger sous l'effet de la pression de la résine, et limite donc le fluage de celle-ci et l'amincissement des bords du panneau obtenu.

De préférence, chaque cale de limitation des effets de bord dispose d'une épaisseur approximativement égale à celle du panneau destiné à être obtenu à partir de l'empilement, à la fin de l'étape de consolidation de cet empilement. Cette spécificité permet donc également avantageusement de maîtriser l'épaisseur finale de la plaque, qui ne pourra ainsi être inférieure à celle des cales. A titre indicatif, on prévoit que l'épaisseur des cales soit en tout point de la périphérie de l'empilement légèrement inférieure à celle du panneau final, par exemple d'une grandeur de l'ordre de 0,1 à 0,5 mm.

Cependant, il est alternativement possible de prévoir des cales dont l'épaisseur initiale (nominale) soit en tout point de la périphérie de l'empilement légèrement supérieure à celle du panneau final, par exemple d'une grandeur de l'ordre de 0,1 à 0,5 mm. Dans un tel cas, on fait alors en sorte que ces cales soient déformables par compression durant la consolidation, afin naturellement de pouvoir obtenir le panneau avec l'épaisseur désirée. A titre d'exemple illustratif, les cales peuvent ainsi être réalisées en élastomère haute température, tel que du silicone 691PX. Avec une telle configuration, les effets de bords sont alors totalement éradiqués.

En d'autres termes, on fait en sorte que chaque cale de limitation des effets de bord dispose d'une épaisseur initiale supérieure à celle du panneau destiné à être obtenu à partir de l'empilement, à la fin de l'étape de consolidation de cet empilement, chaque cale étant alors conçue et disposée de manière à être déformée par compression par la plaque de compactage, durant la mise en oeuvre de cette étape de consolidation.

De plus, il est possible de faire en sorte que chaque cale de limitation des effets de bord dispose d'au moins une surface, pourvue d'une pluralité de rainures de drainage, toujours dans le but d'obtenir un meilleur drainage des gaz durant l'étape de consolidation de l'empilement. A titre indicatif, ces rainures sont préférentiellement pratiquées sur les deux faces opposées des cales de matage, à savoir la face en contact avec la plaque de compactage et la face en contact avec la plaque de marbre servant de support. Leur positionnement relatif est de préférence en quinconce d'une face par rapport à l'autre.

Par ailleurs, l'étape de consolidation de l'empilement peut être réalisée d'une part en appliquant une dépression au sein d'une chambre étanche partiellement délimitée par le support et dans laquelle se situe l'empilement de nappes et la plaque de compactage, et d'autre part en réalisant un chauffage de ce même empilement de nappes de fibres pré-imprégnées. Cependant, il pourrait alternativement être mis en oeuvre une pression pour compacter l'empilement de nappes de fibres, sans sortir du cadre de l'invention, même si cette solution apparaît moins pertinente que celle citée ci-dessus.

Dans le cas préférentiel de l'application d'une dépression, on prévoit que l'outillage comporte également des moyens de mise en dépression de la chambre étanche, communiquant avec des orifices traversants prévus au sein de ce support, prenant par exemple la forme d'une plaque de marbre, de céramique, de titane ou de tout autre matériau approprié connu de l'homme du métier.

En ce qui concerne le chauffage de l'empilement nécessaire pour obtenir la fusion de la résine pré-imprégnée durant l'étape de consolidation, on prévoit que l'outillage comporte de plus des moyens de chauffage intégrés au support. Toujours à titre indicatif, ces moyens de chauffage peuvent prendre la forme de résistances électriques et/ou de canaux de circulation d'un fluide caloporteur, qui sont réalisés au sein du support précité lors de la fabrication de ce dernier.

Alternativement, l'outillage pourrait être placé dans une étuve afin de porter l'empilement à la température désirée, sans sortir du cadre de l'invention. Néanmoins, l'avantage d'un tel outillage permettant à la fois la réalisation du drapage et celle de la consolidation de l'empilement, est que cette dernière étape peut être effectuée sans avoir à déplacer l'outillage incorporant en son sein les nappes empilées mais non encore solidarisées les unes aux autres. En effet, une telle opération de déplacement de l'outillage engendre des risques de mouvements relatifs entre les nappes constituant l'empilement, ces risques étant surtout rencontrés lorsque ces nappes sont constituées en matériau composite thermoplastique, du fait de l'absence d'adhérence naturelle de ces nappes réalisées dans un tel matériau.

On peut prévoir que le procédé est destiné à l'obtention, à la fin de l'étape de consolidation de l'empilement, d'un panneau sensiblement plan, ce dernier pouvant éventuellement être destiné à subir des opérations ultérieures telles que des opérations de formage du type estampage, ces opérations ne faisant néanmoins pas partie de l'objet de la présente invention.

Alternativement, le procédé est destiné à l'obtention, à la fin de l'étape de consolidation de l'empilement, d'un panneau présentant une simple courbure ou une double courbures. A titre informatif, les panneaux à simple courbure sont dits « développables », et présentent une génératrice rectiligne impliquant qu'ils peuvent être « déroulés » sur un plan. En revanche, les panneaux à double courbures, tels que les panneaux de fuselage du cockpit d'un aéronef, ne sont pas « développables » et ne disposent donc pas de génératrice rectiligne, c'est-à-dire qu'ils ne peuvent pas être « déroulés » sur un plan. Effectivement, ils présentent une première courbure, par exemple dans la direction longitudinale du panneau, ainsi qu'une seconde courbure distincte de la première, par exemple dans la direction transversale de ce même panneau.

Dans un tel cas, on prévoit que l'étape de drapage est réalisée de sorte que suite à la mise en place d'une nappe donnée de fibres pré-imprégnées sur d'autres nappes déjà empilées, la nappe donnée est solidarisée à au moins l'une des nappes de fibres pré-imprégnées déjà empilées, à l'aide d'au moins un point de soudure. Cela permet ainsi de maintenir la géométrie de l'empilement constitué par exemple de nappes en matériau composite thermoplastique peu adhérentes entre elles, et pour lesquelles une soudure continue de leurs bords respectifs les liant les unes aux autres ne peut pas toujours être réalisée, en particulier lorsqu'il s'agit de la fabrication d'un panneau à simple ou à double courbures constitué à partir de nappes successives ne disposant pas toujours des mêmes dimensions, et étant donc dans l'incapacité d'être assemblées deux à deux sur tout leur pourtour par une telle soudure continue du fait de la disjonction entre certains bords de nappes successifs.

Par ailleurs, si cette technique de soudage par points des nappes de l'empilement est préférentiellement retenue pour la fabrication de panneau à courbure(s), elle peut également être mise en oeuvre pour la fabrication de panneaux plans. Cependant, dans ce dernier cas, la soudure en continue des bords des nappes successives constitue une solution envisageable du fait des dimensions habituellement identiques des différentes nappes de l'empilement, même si la technique de soudage par points reste préférée.

Comme évoqué précédemment, le procédé s'applique de préférence à la fabrication d'un panneau de fuselage d'aéronef, sensiblement plan, à simple courbure, ou encore à double courbures, d'une surface pouvant par exemple être comprise entre 10 et 30 m². A ce titre, il est noté que le panneau obtenu par la mise en oeuvre du procédé selon la présente invention peut être amené à subir des opérations ultérieures afin de constituer un panneau de fuselage prêt au montage. Parmi ces opérations, on compte par exemple celle visant à rapporter des raidisseurs par soudage continu sur le panneau compacté, ces raidisseurs pouvant eux-mêmes être réalisés par estampage de plaques planes également susceptibles d'être obtenues selon le procédé objet de l'invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures 1a à 1k sont des vues schématisant différentes opérations réalisées lors de la mise en oeuvre d'un procédé de fabrication d'un panneau en matériau composite, selon un premier mode de réalisation préféré de la présente invention ; et
- la figure 2 est une vue schématisant une étape réalisée lors de la mise en oeuvre d'un procédé de fabrication d'un panneau en matériau composite, selon un second mode de réalisation préféré de la présente invention.

### EXPOSÉ DÉTAILLÉ DE MODES DE RÉALISATION PRÉFÉRÉS

En référence tout d'abord aux figures la à 1k, on peut apercevoir différentes opérations successives réalisées lors de la mise en oeuvre d'un procédé de fabrication d'un panneau en matériau composite, selon un premier mode de réalisation préféré de la présente invention. Dans ce premier mode, le panneau que l'on désire obtenir est de forme sensiblement plane, et par exemple globalement carré ou rectangulaire, d'une épaisseur comprise 1 et 20 mm. A titre indicatif, il est noté que celui-ci trouve une application particulière dans le domaine de l'aéronautique en tant que panneau de fuselage d'un aéronef, comprenant par exemple un taux de fibres proche de 65%.

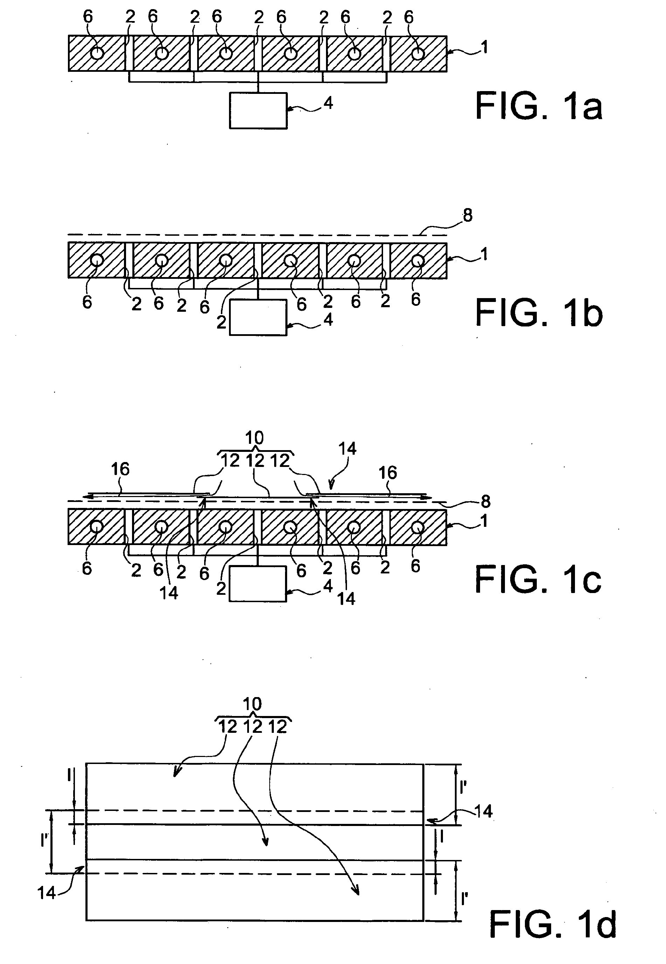

Sur la figure 1a, on peut apercevoir que l'outillage utilisé pour la mise en oeuvre de ce procédé comporte en premier lieu un support assimilable à une plaque de marbre référencée 1. Cette plaque 1 est traversée perpendiculairement, par rapport au plan selon lequel elle s'étend, par une pluralité d'orifices traversants 2 prévus au sein de cette plaque de marbre 1. Comme cela sera détaillé plus explicitement ci-après, les orifices traversants 2 sont reliés à des moyens de mise en dépression 4, à l'aide d'un réseau de communication fluidique (non référencé) classique et pouvant prendre toute forme connue de l'homme du métier.

Par ailleurs, la plaque de marbre 1 est équipée de moyens de chauffage prenant ici la forme d'une pluralité de résistances mécaniques ou de canaux de circulation d'un fluide caloporteur 6, qui sont intégralement prévues à l'intérieur de cette plaque de marbre 1 servant de support.

Le procédé selon le premier mode de réalisation préféré est initié en plaçant un tissu de drainage 8 sur la plaque 1, ce tissu étant par la suite dénommé second tissu 8. Il est par exemple constitué de façon connue de l'homme du métier par du tissu de verre, comme du tissu de verre fin (Réf : 2165 Z6040) ou du tissu de verre grossier (réf :7628 TF 970) de la société HEXCEL Fabrics^{®}. Ce second tissu de drainage 8, schématisé sur la figure 1b, permet d'assurer un dégazage de l'empilement de nappes en matériau composite destiné à reposer au-dessus de ce second tissu 8, lors de l'étape ultérieure de consolidation de cet empilement visant à compacter ce dernier, comme cela ressortira plus clairement ci-après.

Ensuite, il est procédé à la mise en place d'un ensemble de films polyimides se recouvrant partiellement les uns les autres, cet ensemble référencé 10 sur la figure 1c étant par la suite dénommé second ensemble de films polyimides. Ainsi, ce second ensemble 10 est constitué par une pluralité de films polyimides 12, ici prévus au nombre de trois, qui se recouvrent partiellement les uns les autres, et plus particulièrement deux à deux sur des zones dites de recouvrement ou de chevauchement. De préférence, on prévoit que chacun des films 12 se présente sous la forme d'une bande, et que ces bandes sont disposées parallèlement les unes aux autres comme cela est clairement montré sur la figure 1d, même si il est alternativement possible d'envisager que ces bandes parallèles soient inclinées par rapport aux directions longitudinale et transversale du panneau destiné à être obtenu. Ainsi, les zones de recouvrement 14 sont également assimilables à des bandes de plus faible largeur orientées selon la même direction d'agencement des films 12. On prévoit de préférence que l'ensemble 10 ne présente jamais plus de deux films 12 superposés l'un sur l'autre en un point donné. Comme cela est montré schématiquement par les flèches 16 sur la figure 1c, il est noté que les zones de recouvrement 14 sont avantageuses en ce sens qu'elles permettent le passage de l'air et des gaz lors de l'étape ultérieure de consolidation de l'empilement, étant donné qu'au niveau de ces mêmes zones 14, l'étanchéité de l'ensemble 10 n'est avantageusement pas totalement assurée. A titre indicatif, les largeurs « 1 » des zones de recouvrement 14 et les largeurs « 1' » des bandes de films polyimides 12 varient en fonction de la courbure du panneau. Ainsi, on prévoit de préférence d'utiliser des bandes d'une largeur « 1' » d'environ 254 mm (10 pouces) pour fabriquer des panneaux plans dont la superficie totale est inférieure à 2 m², alors que dans le cas où la superficie totale du panneau plan est supérieure à 2 m², on prévoit de préférence d'utiliser des bandes d'une largeur « 1' » d'environ 350 mm (13,8 pouces).

Par ailleurs, dans le cas d'un panneau à courbure(s), la largeur « 1' » des bandes constitutives est de l'ordre de 350 mm (13,8 pouces) pour les faibles courbures, et de l'ordre de 254 mm (10 pouces) pour les courbures prononcées.

De plus, quelle que soit la géométrie du panneau, la largeur « 1 » des zones de recouvrement 14 est de préférence fixée aux alentours de 15 mm.

Les films polyimides 12 employés, également dénommés thermalimides, sont bien entendu choisis pour résister à des températures élevées pouvant atteindre 400°C ou plus, telles que celles rencontrées durant l'étape de consolidation de l'empilement visant notamment à assurer la fusion de la résine des nappes pré-imprégnées en matériau composite. L'épaisseur de ces films 12 est préférentiellement comprise entre environ 20 et 50 µm, et la disposition ainsi que le nombre de ces mêmes seconds films 12 sont déterminés de manière à ce qu'ils puissent interdire le contact entre l'empilement de nappes déposées ultérieurement, et la plaque de marbre 1.

Le procédé de fabrication est poursuivi en réalisant une étape de drapage consistant à effectuer un empilement 18 d'une pluralité de nappes de fibres pré-imprégnées 20, selon une direction d'empilement 21 sensiblement orthogonale au plan (non référencé) dans lequel s'étend la plaque de marbre 1. Ainsi, les nappes 20, de préférence réalisées en matériaux composites thermoplastiques, par exemple à matrice thermoplastique résine PEEK ou résine PPS et fibres de carbone continues, sont donc disposées les unes au-dessus des autres selon cette direction d'empilement 21. Naturellement, le nombre de ces nappes 20 formant chacune une couche de l'empilement est déterminé en fonction de l'épaisseur finale désirée pour le panneau.

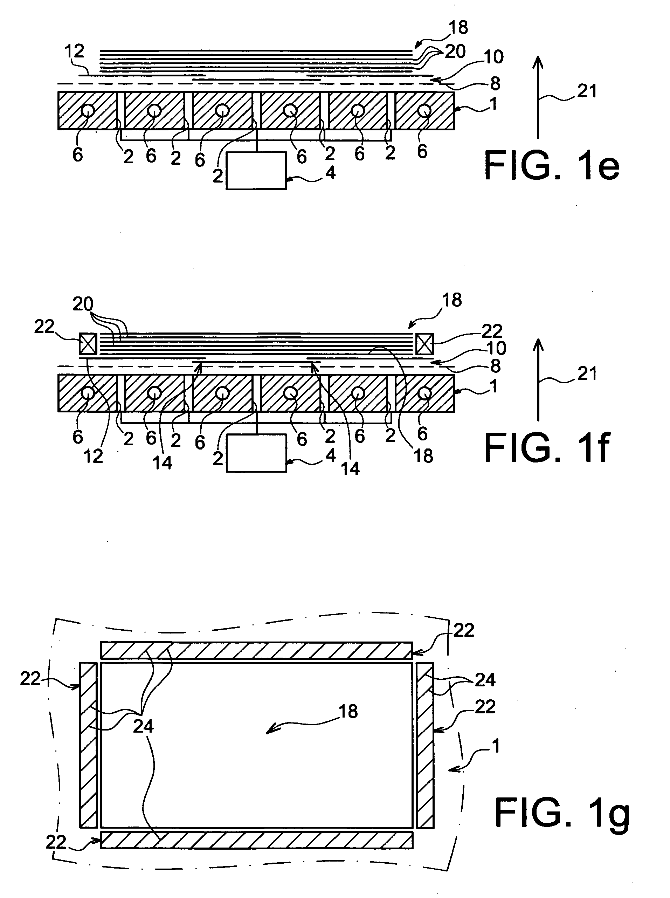

Sur la figure 1e, on peut voir que la surface inférieure de cet empilement 18, considéré selon la direction 21, est entièrement au contact du second ensemble de films polyimides 10. Cela permet d'assurer pour l'empilement ultérieurement compacté, une surface inférieure disposant d'un état de surface de très bonne qualité, parfaitement compatible avec les exigences du domaine aéronautique. A titre indicatif, il est noté qu'au fur et à mesure que les nappes de fibres pré-imprégnées 20 sont disposées les unes au-dessus des autres, la dernière nappe déposée peut être solidarisée à l'ensemble déjà empilé, de préférence à l'aide d'un ou d'une pluralité de points de soudure par exemple situés aux extrémités de chacune de ces nappes, celles-ci disposant habituellement d'une forme sensiblement carrée ou rectangulaire. Cela permet d'éviter des déplacements relatifs entre les différentes nappes 20 au sein de l'empilement, qui sont effectivement susceptibles de se produire en raison de la faible adhérence mutuelle attachée à ces nappes en matériau composite thermoplastique. Il est précisé qu'une soudure continue est également envisageable pour assurer un tel maintien, sans sortir du cadre de l'invention.

En référence à présent à la figure 1f, on peut voir que le procédé est poursuivi en disposant des cales 22 de limitation des effets de bord susceptibles de se produire lors de l'étape ultérieure de consolidation de l'empilement 18. Ces cales sont de préférence prévues tout autour de l'empilement 18 tel que cela est montré sur la figure 1g, et cheminent donc chacune le long d'un bord de cet empilement. Ces cales 22, qui pourraient alternativement être mises en place sur le support 1 préalablement à la réalisation de l'étape de drapage, sont maintenues fixement sur cette dernière plaque 1 à l'aide de moyens d'assemblage adaptés, tels que du ruban adhésif résistant à haute température. L'assemblage précité est effectué de sorte que ces cales 22 puissent tout de même être situées au-dessus du second tissu de drainage 8 et du second ensemble de films polyimides 10, en étant au contact de ce dernier.

L'épaisseur de ces cales, correspondant à leur dimension selon la direction 21, est approximativement égale à celle du panneau destiné à être obtenu à partir de cet empilement 18. Cette spécificité permet clairement de maîtriser l'opération de consolidation visant à compacter l'empilement 18, étant donné que l'épaisseur de ce panneau ne pourra donc être inférieure à celle des cales 22 montées sur la plaque 1. A titre indicatif, cette épaisseur de cale est prévue pour être environ inférieure d'une grandeur de 0,1 mm à 0,5 mm à celle du panneau final destiné à être obtenu.

Par ailleurs, pour assurer un drainage du gaz satisfaisant en combinaison avec le second tissu de drainage 8 et le premier tissu de drainage qui sera décrit ultérieurement, chacune des cales 22 dispose de rainures de drainage ou stries 24 pratiquées sur leur surface supérieure et/ou sur leur surface inférieure, comme cela est montré schématiquement sur la figure 1g.

Par ailleurs, ces cales peuvent chacune. être bloquées dans la direction leur étant transversale, et plus précisément dans le sens allant en s'écartant de l'empilement, par exemple à l'aide de butées prévues sur le support 1. Cependant, il est également possible de prévoir des cas où ces cales sont entièrement libres en translation sur le support 1, sans sortir du cadre de l'invention.

En outre, il est alternativement possible de prévoir des cales dont l'épaisseur soit légèrement supérieure à celle du panneau final, par exemple d'une grandeur de l'ordre de 0,1 à 0,5 mm. Dans un tel cas, ces cales éradiquant totalement les effets de bords sont prévues pour être déformables par compression durant l'étape consolidation, afin de pouvoir obtenir le panneau avec l'épaisseur désirée.

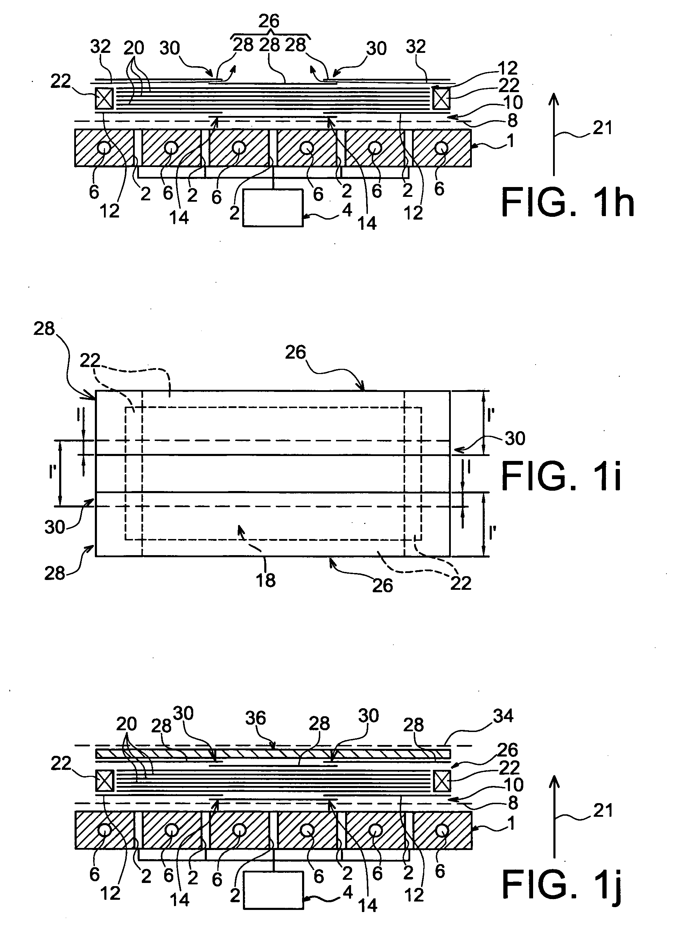

Ensuite, il est à nouveau procédé à la mise en place d'un ensemble de films polyimides 26, dit premier ensemble de films polyimides, et composé d'une pluralité de films 30 se recouvrant partiellement les uns les autres. Ce second ensemble 26 est identique ou similaire au premier ensemble 10 décrit ci-dessus, dans la mesure où il est par exemple constitué de trois (ou plus) films polyimides 28 se recouvrant partiellement les uns les autres, et plus particulièrement deux à deux sur des zones dites de recouvrement ou de chevauchement. De préférence, on prévoit que chacun des films 28 se présente sous la forme d'une bande, et que ces bandes sont disposées parallèlement les unes aux autres, comme cela est clairement montré sur la figure 1i. Ainsi, les zones de recouvrement 30 sont également assimilables à des bandes de plus faible largeur orientées selon la même direction d'agencement des films 28. On prévoit de préférence que l'ensemble 26 ne présente jamais plus de deux films 28 superposés l'un sur l'autre en un point donné. Comme cela est montré schématiquement par les flèches 32 sur la figure 1h, il est noté que les zones de recouvrement 30 sont avantageuses en ce sens qu'elles permettent le passage de l'air et des gaz lors de l'étape ultérieure de consolidation de l'empilement, tout comme les zones de recouvrement 14 du premier ensemble 10.

Toujours à titre indicatif, les largeurs « 1 » des zones de recouvrement 30 et les largeurs « 1' » des bandes de films polyimides 28 sont telles que décrites ci-dessus, et de préférence identiques à celles adoptées pour le second ensemble de films polyimides. De plus, les films polyimides 28 employés sont du même type que ceux du premier ensemble, à savoir choisis pour résister à des températures élevées pouvant atteindre 400°C ou plus, telles que celles rencontrées durant l'étape de consolidation de l'empilement visant notamment à assurer la fusion de la résine des nappes pré-imprégnées en matériau composite. Ici encore, l'épaisseur des films 28 est préférentiellement comprise entre environ 20 et 50 µm, et la disposition ainsi que le nombre de ces mêmes premiers films 28 sont déterminés de manière à ce qu'ils puissent interdire le contact entre l'empilement des nappes 20 déposées, et la plaque de compactage mise en place ultérieurement. Pour ce faire, comme montré schématiquement sur la figure 1i, le premier ensemble 26 est prévu pour s'étendre sur toute la surface supérieure de l'empilement 18, mais également pour déborder sur chacune des cales 22, qui peuvent éventuellement aussi être entièrement recouvertes par les premiers films 28. Comme montré sur la figure 1i, dans le sens longitudinal des bandes 28, celles-ci dépassent de préférence légèrement les cales 22, ce qui n'est pas le cas pour les autres cales disposées transversalement. A ce titre, on pourrait même prévoir que les bandes 28 ne recouvrent pas ces mêmes cales 22 disposées transversalement, sans sortir du cadre de l'invention.

Dans la mesure où la surface supérieure de cet empilement 18, considéré selon la direction 21, est entièrement au contact du premier ensemble de films polyimides 26, cela permet ici aussi d'assurer pour l'empilement ultérieurement compacté, une surface supérieure disposant d'un état de surface de très bonne qualité, parfaitement compatible avec les exigences du domaine aéronautique.

Comme cela est le mieux visible sur la figure 1h, les zones de recouvrement/chevauchement 30 du premier ensemble 26 sont chacune situées en regard de l'une des zones de recouvrement/chevauchement 14 du second ensemble 10, selon la direction 21. Néanmoins, il serait également envisageable d'opérer un décalage de ces zones de chevauchement 14, 30, à savoir de les disposer autrement qu'en les plaçant en vis-à-vis deux à deux selon cette même direction 21. Toutefois, il est indiqué que ces zones de chevauchement 14, 30 restent de préférence toutes au contact de la surface inférieure ou de la surface extérieure de l'empilement non encore compacté, c'est-à-dire au contact de la première ou de la dernière nappe 20 déposée.

Comme montré sur la figure 1j, et préalablement à l'étape de consolidation de l'empilement 18, il est réalisé une étape de mise en place d'une plaque de compactage 36, également dite plaque ou tôle de matage, réalisée en matériau métallique classique tel qu'en acier inoxydable. Cette plaque 36 est agencée au-dessus de l'empilement 18, de manière à ce que sa surface inférieure de compactage soit au contact du premier ensemble 26 de film polyimide 28. Comme le montre schématiquement la figure 1j, ses dimensions sont prévues pour pouvoir éventuellement venir en butée contre chacune des cales 22 prévues tout autour de l'empilement 18. Naturellement, la plaque de compactage 36 est disposée sensiblement parallèlement à la plaque formant support 1, étant donné que le panneau désiré doit revêtir une forme sensiblement plane.

Le procédé de fabrication est poursuivi en mettant en place un premier tissu de drainage 34 au-dessus de la plaque de compactage 36, comme montré également sur la figure 1j. Bien entendu, il est noté que ce premier tissu de drainage 34 dispose d'un rôle identique à celui joué par le second tissu de drainage 8 exposé précédemment, la seule différence entre ces deux tissus 8, 34 étant qu'ils sont respectivement destinés à être associés à une surface inférieure de l'empilement 18 et à une surface supérieure de ce dernier. Pour cette raison, il peut donc s'agir d'un tissu de même type, disposant des mêmes propriétés de drainage.

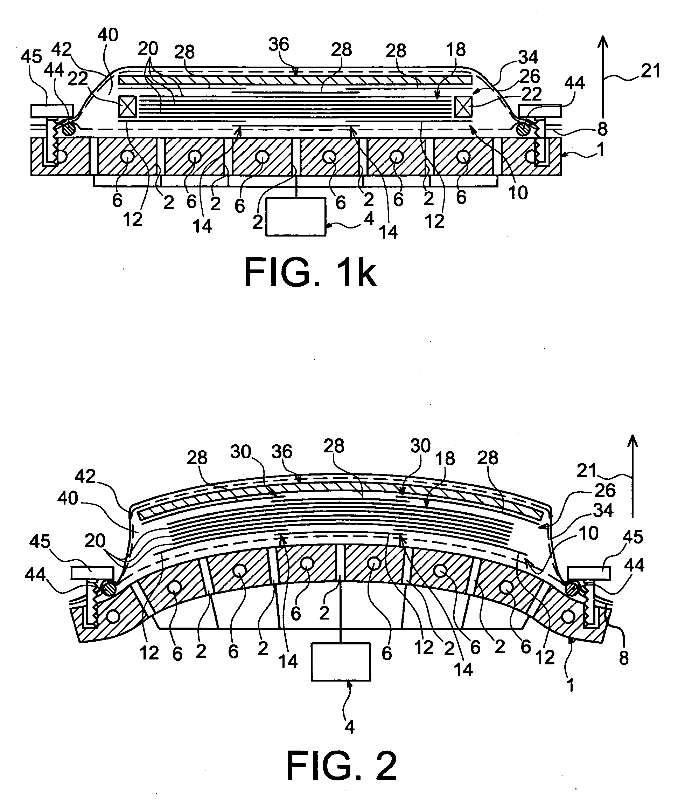

La dernière opération réalisée avant la mise en oeuvre de l'étape de consolidation de l'empilement 18 consiste à venir créer une chambre étanche 40 à l'aide de la plaque de marbre 1, sur laquelle on vient monter une vessie étanche 42 recouvrant l'ensemble des éléments précités, comme cela est visible sur la figure 1k. Pour ce faire, la vessie 42 est plaquée tout autour de l'empilement 18 sur la plaque de marbre 1 à l'aide d'une ou plusieurs vis 45 de pression vissée dans cette dernière, la tête de vis 45 écrasant un joint d'étanchéité 44 reposant au contact de cette même plaque 1. A titre indicatif et comme cela est montré sur la figure, les deux tissus de drainage 8 et 34 peuvent également être plaqués sur le joint d'étanchéité 44 par l'intermédiaire de la vis de pression 45, ceci en les plaçant entre la vessie 42 et ce même joint d'étanchéité 44.

Ainsi, la plaque 1 et la vessie d'étanchéité 42 forment conjointement une chambre étanche 40 au sein de laquelle se trouve l'empilement de nappes de fibres pré-imprégnées 20, qui peut alors subir ladite opération de consolidation visant globalement à compacter cet empilement 18.

Pour se faire, il est simultanément mis en oeuvre les moyens de chauffage 6, ainsi que les moyens de mise en dépression 4 permettant de faire le vide au sein de la chambre 40 à l'aide des orifices traversant 2 situés au sein de la plaque 1, et débouchant dans cette même chambre 40. Plus précisément, les moyens de chauffage sont actionnés de manière à appliquer une température de l'ordre de 400°C au sein de l'empilement 18, de façon à provoquer la fusion de la résine nécessaire au compactage de cet empilement. Naturellement, comme évoqué précédemment, les films polyimides 20 et 28 sont conçus pour supporter de telles températures, de sorte qu'ils ne se dégradent pas durant l'étape de consolidation. Lorsque le vide est réalisé au sein de la chambre 40 à travers les orifices 2, la vessie 42 applique alors une pression sur la plaque de compactage 36 qui tend ainsi à se rapprocher de la plaque support 1 en se déplaçant orthogonalement à la direction d'empilement 21. Ainsi, en se déplaçant de la sorte sous l'action de la vessie 42, la plaque 36 au contact du premier ensemble de films polyimides 26 engendre un placage des nappes 20 dans la direction d'empilement 21 contre la plaque 1, ces nappes ayant alors tendance à se compacter et à se solidariser grâce à la fusion de la résine pré-imprégnée sur ces mêmes nappes. Cette étape de consolidation est réalisée jusqu'à ce que le panneau obtenu par compactage dispose d'une épaisseur selon la direction 21 qui soit celle désirée, et qui est de toute façon plafonnée par l'épaisseur des cales 22, lorsque celle-ci est prévue pour être légèrement inférieure à l'épaisseur finale du panneau. Lorsque cette épaisseur cible a été atteinte, à la fin de l'étape de consolidation, la chambre 40 est ouverte par retrait de la vessie 42, et l'empilement compacté obtenu formant le panneau désiré peut alors être extrait de l'outillage.

A titre indicatif, la chambre 40 est ouverte par retrait de la vessie 42 et l'empilement compacté obtenu formant le panneau désiré peut alors être extrait de l'outillage. Il peut éventuellement être nécessaire de retirer les films polyamides 12, 28 qui continuent à adhérer sur les surfaces supérieures et/ou inférieures du panneau obtenu. Cependant, il est noté que les films polyimides/thermalimides sont habituellement tels qu'en fin d'étape de consolidation de l'empilement 18, ils n'adhèrent à aucun autre des éléments prévus pour réaliser cette étape, de sorte que leur retrait ne constitue avantageusement aucun problème particulier.

A présent en référence à la figure 2, on peut voir un second mode de réalisation préféré selon la présente invention, dont le but n'est plus d'obtenir un panneau de forme sensiblement plane, mais un panneau disposant d'une simple ou d'une double courbures.

A titre indicatif, ce type de panneau est classiquement rencontré dans le domaine de l'aéronautique, en tant que panneau de fuselage d'un aéronef.

La figure 2 représente l'état de l'outillage et de l'empilement de nappes tels que se présentant juste avant la réalisation de l'étape de consolidation de ce même empilement. Elle correspond donc à l'état montré sur la figure 1k dans le cas du premier mode de réalisation préféré de l'invention.

Comme on peut le voir sur cette figure 2, toutes les opérations ayant conduit à cet assemblage sont similaires à celles décrites pour le premier mode de réalisation en référence aux figures 1a à 1k. Il est noté que cet assemble diffère tout de même de celui rencontré dans le premier mode par la forme de certains éléments de l'outillage employé, ainsi que par l'absence de cales de limitation des effets de bord qui n'ont pas été prévues. Néanmoins, celles-ci pourraient être agencées de la même manière que décrit pour le premier mode de réalisation, sans sortir du cadre de l'invention.

Ainsi, afin d'obtenir la simple ou la double courbures pour le panneau de fuselage, le support 1 en marbre ne prend plus la forme d'une plaque plane, mais dispose d'une géométrie complémentaire de celle désirée pour l'une des deux faces du panneau. De façon analogue, la plaque de compactage 36 dispose d'une surface de compactage qui n'est plus plane, mais qui dispose d'une géométrie de forme complémentaire à celle de l'autre des deux faces devant être réalisées pour le panneau. Bien entendu, bien que la figure 2 montre une surface de support concave et une surface de compactage de la plaque 36 de forme convexe, une configuration inversée entre ces surfaces de forme convexe et concave (chacune à simple ou à double courbures) pourrait naturellement être envisagée, sans sortir du cadre de l'invention.

Une autre différence avec le premier mode de réalisation préféré réside dans la solidarisation entre les différentes couches 20 en matériau composite thermoplastique de l'empilement 18, qui présentent une faible adhérence. En effet, étant donné que la simple ou double courbures recherchée pour le panneau entraîne la superposition de bandes disposant de largeurs différentes, la disjonction entre les bords de ces bandes interdit donc parfois la solidarisation de deux bandes directement consécutives par soudure continue tout autour de celles-ci. Pour faire face à ce problème, on envisage alors, au lieu de souder ces nappes tout autour de leur pourtour, de souder celles-ci par un ou plusieurs points de soudure judicieusement positionnés. Cette façon de faire peut être adoptée pour la solidarisation de chacune des nappes de fibres 20 à partir de la seconde dans l'empilement, étant donné que la première ne peut naturellement pas être solidarisée de la sorte sur le support 1. Ainsi, pour assurer un maintien correct de la première nappe de l'empilement 18 par rapport à ce même support en marbre 1, il peut être remis en oeuvre un placage de cette première nappe 20 contre la surface de support de la plaque 1, par l'intermédiaire d'une mise en dépression assurée grâce aux moyens 4. En effet, lorsqu'une aspiration est réalisée à l'aide de ces mêmes moyens 4, avant même que la vessie 42 ait été mise en place sur le support 1, l'air aspiré par les orifices traversant 2 provoque avantageusement le placage de la première nappe 20 de l'empilement 18 contre ce même support en marbre 1. Cela permet ainsi d'utiliser les moyens de mise en dépression 4 pour une autre finalité que celle principale visant à assurer ultérieurement le vide au sein de la chambre étanche 40, pour réaliser l'étape de consolidation de l'empilement 18.

Une autre particularité de ce second mode de réalisation préféré de la présente invention consiste dans l'obtention de la forme précise de la plaque de compactage 36, constituant une partie de l'outillage. En effet, cette plaque 36 est avantageusement réalisée dans un matériau comprenant du mica et de la résine, tel que décrit dans la demande de brevet BE 758 263, ou encore trouvé sous la marque commerciale MIGLASIL^{®} proposée par la société VON ROLL ISOLA^{®}, ce qui lui assure des propriétés lui permettant d'être déformable durant la première mise en température, et de devenir extrêmement rigide une fois cette première mise en température achevée. Par conséquent, cette plaque 36 est réalisée dans le matériau précité, et grossièrement préformée pour se rapprocher de la géométrie finale requise. Lors de sa première utilisation pour la réalisation d'un panneau à simple ou double courbures, cette plaque préformée est agencée de la façon décrite précédemment, à savoir sur le premier ensemble de films polyimides 26. Puis, lors de l'étape de consolidation de l'empilement de nappes de fibres à haute température, la plaque de compactage 36 va d'une part se déformer en se plaquant contre cet empilement 18, et va simultanément atteindre sa température de cuisson à partir de laquelle cette plaque 36 devient rigide. Par conséquent, c'est seulement une fois que cette plaque s'est totalement conformée à l'empilement 18 sous l'effet de la pression appliquée par la vessie d'étanchéité 42 que celle-ci va adopter sa forme finale précise, qui est alors capable d'être conservée durant toute les mises à température ultérieures, du fait des propriétés spécifiques du matériau employé.

Ainsi, cette plaque 36 à courbure très précise peut alors être utilisée pour la réalisation des panneaux suivants à l'aide de ce même outillage, puisqu'elle sera parfaitement capable de conserver, durant les étapes de compactage suivantes à haute température, sa forme précise adoptée lors de la première cuisson.

Sans sortir du cadre de l'invention, il serait alternativement possible de prévoir une plaque fabriquée de manière à présenter directement sa forme définitive précise, sans qu'il ne soit donc nécessaire d'avoir recours à la fabrication d'un premier panneau pour obtenir cette forme.

Bien entendu, diverses modifications peuvent être apportées dans le cadre des revendications par l'homme du métier à l'invention qui vient d'être décrite, uniquement à titre d'exemples non limitatifs.

## Revendications

1. Procédé de fabrication d'un panneau en matériau composite à l'aide d'un outillage présentant un support (1) sur lequel on effectue une étape de drapage consistant à réaliser un empilement (18) de nappes de fibres pré-imprégnées (20), suivie d'une étape de consolidation de l'empilement (18) visant à obtenir ledit panneau à l'aide d'une plaque de compactage (36) agencée au-dessus de cet empilement,
un premier ensemble (26) de films polyimides (28) se recouvrant partiellement les uns les autres étant situé au contact de l'empilement (18) de nappes, entre ce dernier et ladite plaque de compactage (36).

2. Procédé de fabrication selon la revendication 1, **caractérisé en ce qu'**il est mis en oeuvre de sorte qu'un second ensemble (10) de films polyimides (12) se recouvrant partiellement les uns les autres soit situé au contact de l'empilement (18) de nappes, entre ce dernier et ledit support (1) de l'outillage.

3. Procédé de fabrication selon la revendication 2, **caractérisé en ce qu'**il comporte également une étape de mise en place sur ladite plaque de compactage (36) d'un premier tissu de drainage (34), cette étape étant mise en oeuvre de manière à ce que ledit premier tissu (34) soit situé au contact de cette plaque de compactage (36) et séparé dudit premier ensemble (26) de films polyimides (28) par cette même plaque (36), et **en ce qu'**il comporte en outre une étape de mise en place sur ledit support (1) de l'outillage d'un second tissu de drainage (8), cette étape étant mise en oeuvre de manière à ce que ledit second tissu de drainage (8) soit situé au contact du support (1) de l'outillage, entre ce dernier et ledit second ensemble (10) de films polyimides (12).

4. Procédé de fabrication selon l'une quelconque des revendications précédentes, **caractérisé en ce qu'**il comporte en outre une étape de mise en place d'au moins une cale (22) de limitation des effets de bord susceptibles de se produire lors de l'étape ultérieure de consolidation de l'empilement, chaque cale (22) étant disposée le long d'un bord de cet empilement (18).

5. Procédé de fabrication selon la revendication 4, **caractérisé en ce que** chaque cale (22) de limitation des effets de bord dispose d'une épaisseur approximativement égale à celle du panneau destiné à être obtenu à partir dudit empilement (18), à la fin de ladite étape de consolidation de cet empilement.

6. Procédé de fabrication selon la revendication 4 ou la revendication 5, **caractérisé en ce que** chaque cale (22) de limitation des effets de bord dispose d'au moins une surface pourvue d'une pluralité de rainures de drainage (24).

7. Procédé de fabrication selon l'une quelconque des revendications 4 à 6, **caractérisé en ce que** chaque cale (22) de limitation des effets de bord dispose d'une épaisseur initiale supérieure à celle du panneau destiné à être obtenu à partir dudit empilement (18), à la fin de ladite étape de consolidation de cet empilement, chaque cale (22) étant conçue et disposée de manière à être déformée par compression par ladite plaque de compactage (36), durant la mise en oeuvre de ladite étape de consolidation.

8. Procédé de fabrication selon l'une quelconque des revendications précédentes, **caractérisé en ce que** ladite étape de consolidation de l'empilement (18) est réalisée d'une part en appliquant une dépression au sein d'une chambre étanche (40) partiellement délimitée par ledit support (1) et dans laquelle se situe l'empilement (18) de nappes et ladite plaque de compactage (36), et d'autre part en réalisant un chauffage de ce même empilement (18) de nappes de fibres pré-imprégnées (20).

9. Procédé de fabrication selon la revendication 8, **caractérisé en ce que** l'outillage comporte également des moyens de mise en dépression (4) de la chambre étanche (40), communiquant avec des orifices traversants (2) prévus au sein dudit support (1).

10. Procédé de fabrication selon la revendication 9, **caractérisé en ce que** ledit support (1) prend la forme d'une plaque en marbre.

11. Procédé de fabrication selon l'une quelconque des revendications 8 à 10, **caractérisé en ce que** l'outillage comporte également des moyens de chauffage (6) de l'empilement (18) de nappes de fibres pré-imprégnées (20), ces moyens de chauffage (6) étant intégrés audit support (1).

12. Procédé de fabrication selon l'une quelconque des revendications précédentes, **caractérisé en ce qu'**il est destiné à l'obtention, à la fin de ladite étape de consolidation de l'empilement, d'un panneau sensiblement plan.

13. Procédé de fabrication selon l'une quelconque des revendications 1 à 11, **caractérisé en ce qu'**il est destiné à l'obtention, à la fin de ladite étape de consolidation de l'empilement, d'un panneau présentant une simple courbure.

14. Procédé de fabrication selon l'une quelconque des revendications 1 à 11, **caractérisé en ce qu'**il est destiné à l'obtention, à la fin de ladite étape de consolidation de l'empilement, d'un panneau présentant une double courbures.

15. Procédé de fabrication selon la revendication 13 ou la revendication 14, **caractérisé en ce que** l'étape de drapage est réalisée de sorte que suite à une mise en place d'une nappe donnée (20) de fibres pré-imprégnées sur d'autres nappes (20) déjà empilées, ladite nappe donnée (20) est solidarisée à au moins l'une desdites nappes (20) de fibres pré-imprégnées déjà empilées, à l'aide d'au moins un point de soudure.

16. Procédé de fabrication selon l'une quelconque des revendications précédentes, **caractérisé en ce qu'**il s'applique à la fabrication d'un panneau de fuselage d'aéronef.

## Claims

1. A method for manufacturing a panel in a composite material using a tooling having a support (1) on which one performs a lay-up step consisting of producing a stack (18) of plies of fiber prepregs (20), followed by a step for consolidation of the stack (18) aiming to obtain said panel using a compacting plate (36) arranged above this stack,
a first set (26) of polyimide films (28) partially covering each other being located in contact with the stack (18) of plies, between this stack and said compacting plate (36).

2. The manufacturing method according to claim 1, **characterized in that** it is implemented such that a second set (10) of polyimide films (12) partially covering each other is located in contact with the stack (18) of plies, between this stack and said support (1) of the tooling.

3. The manufacturing method according to claim 2, **characterized in that** it also includes a step for placement on said compacting plate (36) of a first drainage fabric (34), this step being implemented such that said first fabric (34) is located in contact with this compacting plate (36) and separated from said first set (26) of polyimide films (28) by this same plate (36), and **in that** it also comprises a step for placement on said support (1) of the tooling of a second drainage fabric (8), this step being implemented such that said second drainage fabric (8) is located in contact with the support (1) of the tooling, between the latter part and said second set (10) of polyimide films (12).

4. The manufacturing method according to any one of the preceding claims, **characterized in that** it also comprises a step for placement of at least one wedge (22) limiting the edge effects likely to occur during the later consolidation step of the stack, each wedge (22) being arranged along an edge of this stack (18).

5. The manufacturing method according to claim 4, **characterized in that** each wedge (22) limiting the edge effects has a thickness approximately equal to that of the panel designed to be obtained from said stack (18), at the end of said consolidation step of this stack.

6. The manufacturing method according to claim 4 or claim 5, **characterized in that** each wedge (22) limiting the edge effects has at least one surface provided with a plurality of drainage grooves (24).

7. The manufacturing method according to any one of claims 4 to 6, **characterized in that** each wedge (22) limiting the edge effects has an initial thickness greater than that of the panel designed to be obtained from said stark (13), at the end of said consolidation step of this stack, each wedge (22) being designed and arranged so as to be deformed by compression by said compacting plate (36), during implementation of said consolidation step.

8. The manufacturing method according to any one of the preceding claims, **characterized in that** said consolidation step of the stack (18) is done on one hand by applying negative pressure within a sealing chamber (40) partially defined by said support (1) and in which the stack (18) of plies and said compacting plate (36) are located, and on the other hand by performing heating of this same stack (18) of plies of fiber prepregs (20).

9. The manufacturing method according to claim 8, **characterized in that** the tooling also includes negative pressure application means (4) for the sealing chamber (40), connected to through orifices (2) provided within said support (1).

10. The manufacturing method according to claim 9, **characterized in that** said support (1) assumes the form of a marble plate.

11. The manufacturing method according to any one of claims 8 to 10, **characterized in that** the tooling also comprises heating means (6) of the stack (18) of plies of fiber prepregs (20), these heating means (6) being integrated to said support (1).

12. The manufacturing method according to any one of the preceding claims, **characterized in that** it is designed to obtain, at the end of said consolidation step of the stack, a substantially flat panel.

13. The manufacturing method according to any one of claims 1 to 11, **characterized in that** it is designed to obtain, at the end of said consolidation step of the stack, a panel having a single curvature.

14. The manufacturing method according to any one of claims 1 to 11, **characterized in that** it is designed to obtain, at the end of said consolidation step of the stack, a panel having a double curvature.

15. The manufacturing method according to claim 13 or claim 14, **characterized in that** the lay-up step is performed such that following placement of a given ply (20) of fiber prepregs on other already-stacked plies (20), said given ply (20) is secured to at least one of said plies (20) of already-stacked fiber prepregs, using at least one weld point.

16. The manufacturing method according to any one of the preceding claims, **characterized in that** it is applied to the manufacture of an aircraft fuselage panel.

## Patentansprüche

1. Verfahren zur Herstellung einer Platte aus einem Verbundmaterial mit Hilfe eines Werkzeugs, das einen Träger (1) aufweist, an dem eine Drapierungsstufe durchgeführt wird, die aus dem Bilden eines Stapels (18) von Schichten vorgetränkter Fasern (20) besteht, worauf eine Stufe der Verfestigung des Stapels (18) mit dem Ziel der Bildung der Platte mit Hilfe einer Verdichtungsplatte (36), die über diesem Stapel angebracht ist, folgt,
wobei sich eine erste Gruppe (26) von Polyimidfilmen (28), die einander teilweise überdecken, in Kontakt mit dem Stapel (18) der Schichten zwischen diesem letzteren und der Verdichtungsplatte (36) befindet.

2. Herstellungsverfahren nach Anspruch 1, **dadurch gekennzeichnet, dass** es derart durchgeführt wird, dass sich eine zweite Gruppe (10) von Polyimidfilmen (12), die einander teilweise überdecken, in Kontakt mit dem Stapel (18) der Schichten zwischen diesem letzteren und dem Träger (1) des Werkzeugs befindet.

3. Herstellungsverfahren nach Anspruch 2, **dadurch gekennzeichnet, dass** es ferner eine Stufe des Anordnens eines ersten Entwässerungsgewebes (34) an der Verdichtungsplatte (36) umfasst, wobei diese Stufe derart durchgeführt wird, das sich das erste Gewebe (34) in Kontakt mit dieser Verdichtungsplatte (36) befindet und von der ersten Gruppe (26) von Polyimidfilmen (28) durch eben diese Platte (36) getrennt ist, und dass es ferner eine Stufe des Anbringens eines zweiten Entwässerungsgewebes (8) an dem Träger (1) des Werkzeugs umfasst, wobei diese Stufe derart durchgeführt wird, dass sich das zweite Entwässerungsgewebe (8) in Kontakt mit dem Träger (1) des Werkzeugs zwischen diesem letzteren und der zweiten Gruppe (10) von Polymidfilmen (112) befindet.

4. Herstellungsverfahren nach einem der vorhergehenden Ansprüche, **dadurch gekennzeichnet, dass** es ferner eine Stufe des Anordnens von mindestens einem Passstück (22) zur Beschränkung von Randeffekten, die während der späteren Stufe der Verfestigung des Stapels auftreten können, umfasst, wobei jedes Passstück (22) längs eines Randes dieses Stapels (18) angebracht ist.

5. Herstellungsverfahren nach Anspruch 4, **dadurch gekennzeichnet, dass** jedes Passstück (22) zur Beschränkung der Randeffekte eine Dicke aufweist, die näherungsweise gleich der der Platte, die ausgehend von dem Stapel (18) erhalten werden soll, am Ende der Stufe der Verfestigung dieses Stapels ist.

6. Herstellungsverfahren nach Anspruch 4 oder Anspruch 5, **dadurch gekennzeichnet, dass** dieses Passstück (22) zur Beschränkung der Randeffekte mindestens eine Oberfläche aufweist, die mit mehreren Entwässerungsrillen (24) ausgestattet ist.

7. Herstellungsverfahren nach einem der Ansprüche 4 bis 6, **dadurch gekennzeichnet, dass** jedes Passstück (22) zur Beschränkung der Randeffekte eine Anfangsdicke aufweist, die größer als die der Platte, die ausgehend von diesem Stapel (18) erhalten werden soll, am Ende der Stufe der Verfestigung dieses Stapels ist, wobei jedes Passstück (22) derart gestaltet und ausgestattet ist, dass es während der Durchführung der Verfestigungsstufe durch das Zusammenpressen durch die Verdichtungsplatte (36) verformt wird.

8. Herstellungsverfahren nach einem der vorhergehenden Ansprüche, **dadurch gekennzeichnet, dass** die Stufe der Verfestigung des Stapels (18) einerseits durch Anlegen eines Unterdrucks im Inneren einer hermetisch abgeschlossenen Kammer (40), die durch den Träger (1) teilweise begrenzt wird und in der sich der Stapel (18) der Schichten und die Verdichtungsplatte (36) befinden, und andererseits durch Durchführen eines Erhitzens von eben diesem Stapel (18) der Schichten von vorgetränkten Fasern (20) durchgeführt wird.

9. Herstellungsverfahren nach Anspruch 8, **dadurch gekennzeichnet, dass** das Werkzeug ferner Mittel zur Senkung des Drucks (4) der hermetisch abgeschlossene Kammer (40), die mit den im Inneren des Trägers (1) angebrachten durchgehenden Öffnungen (2) in Verbindung stehen, umfasst.

10. Herstellungsverfahren nach Anspruch 9, **dadurch gekennzeichnet, dass** der Träger (1) die Form einer Arbeitsplatte bzw. Marmorplatte aufweist.

11. Herstellungsverfahren nach einem der Ansprüche 8 bis 10, **dadurch gekennzeichnet, dass** das Werkzeug ferner Mittel zum Erhitzen (6) des Stapels (18) der Schichten von vorgetränkten Fasern (20) umfasst, wobei diese Heizmittel (6) in den Träger (1) integriert sind.

12. Herstellungsverfahren nach einem der vorhergehenden Ansprüche, **dadurch gekennzeichnet, dass** am Ende der Stufe der Verfestigung des Stapels eine im wesentlichen ebene Platte erhalten werden soll.

13. Herstellungsverfahren nach einem der Ansprüche 1 bis 11, **dadurch gekennzeichnet, dass** am Ende der Stufe der Verfestigung des Stapels eine Platte erhalten werden soll, die eine einfache Krümmung aufweist.

14. Herstellungsverfahren nach einem der Ansprüche 1 bis 11, **dadurch gekennzeichnet, dass** am Ende der Stufe der Verfestigung des Stapels eine Platte erhalten werden soll, die eine doppelte Krümmung aufweist.

15. Herstellungsverfahren nach Anspruch 13 oder Anspruch 14, **dadurch gekennzeichnet, dass** die Drapierungsstufe derart durchgeführt wird, dass nach dem Anordnen einer gegebenen Schicht (20) vorgetränkter Fasern auf bereits gestapelten anderen Schichten (20) die gegebene Schicht (20) mit Hilfe von mindestens einem Schweißpunkt an mindestens einer der bereits gestapelten Schichten (20) vorgetränkter Fasern verbunden wird.

16. Herstellungsverfahren nach einem der vorhergehenden Ansprüche, **dadurch gekennzeichnet, dass** es zur Herstellung einer Platte des Rumpfs eines Flugzeugs verwendet wird.
